# EUROPEAN PATENT APPLICATION

(11) **EP 4 708 202 A1**
(43) Date of publication of application: **11.03.2026**
(21) Application number: 23935815.3
(22) Date of filing: 14.09.2023
(51) Int. Cl.: G06T 13/40, G06T 19/20, G06F 40/205, G06N 3/08, G06F 16/41, G06F 16/44, G06F 16/45

(54) **METHOD AND SYSTEM FOR GENERATING THREE-DIMENSIONAL OBJECT ON BASIS OF SEMANTIC ANALYSIS**

(30) Priority: 04.05.2023 KR 20230058667
(71) Applicant: Nationa Inc., Seoul 06771 (KR)
(72) Inventor: YOO, Su Yeon, Seoul 05507 (KR); PARK, Jae Yong, Incheon 21443 (KR); HWANG, Hyun Seok, Seoul 02542 (KR)
(74) Representative: AWA Sweden AB
(86) International application number: PCT/KR2023/013837
(87) International publication number: WO 2024/228430

(57) **Abstract**

The present invention relates to a method and a system for generating a three-dimensional object on the basis of semantic analysis. More specifically, the present invention relates to a method and a system for analyzing a sentence in a text format to automatically generate a three-dimensional object corresponding to the meaning of the sentence.

## Description

### [Technical Field]

The present invention relates to a method and system for generating a three-dimensional object based on semantic analysis. More specifically, the present invention relates to a method and system for analyzing a sentence in a text format to automatically generate a three-dimensional object corresponding to the meaning of the sentence.

### [Background Art]

With the growth of the metaverse market, the demand for technology of generating a three-dimensional (3D, 3-Dimensional) object, which is a core element, is rapidly increasing along therewith. Domestic and foreign enterprises are paying attention to the metaverse, which reproduces the real world in a virtual world as a next-generation growth engine, and interest in three-dimensional modeling technology, which converts the real world into three dimensions and expresses it in the virtual world, which is a core technology of the metaverse, is also greatly increasing.

In the past, three-dimensional modeling technology was mainly utilized in a game field, but recently, it is a trend to be extended and applied to all industrial areas, and the application range is expanding to various content industries such as AR/VR, movies, animations, broadcasting, and the like.

However, compared with the high interest in three-dimensional modeling technology, the technical completeness thereof is insufficient. For example, in case of companies generating AI humans, technology development is focused only on generating virtual faces by CG generation scheme or Deep Fake generation scheme, and development for technology of recognizing a human motion and naturally reproducing the motion is insufficient.

In addition, as three-dimensional modeling technology is being spread and applied to all industrial areas, the market of three-dimensional authoring tool is also continuously growing, but current three-dimensional imaging authoring tools are focused only on production of static objects (architecture, interior, facilities, etc.), and research and development for technology of converting moving dynamic objects into three dimensions and expressing them in a three-dimensional space is insufficient.

### [Disclosure]

### [Technical Problem]

The technical object to be solved through embodiments of the present invention is directed to providing a method and system for generating a three-dimensional object by analyzing meaning. Specifically, the present invention is directed to providing a method and system for automatically generating a three-dimensional object corresponding to meaning of the sentence by analyzing a sentence provided in a text format.

To this end, the present invention may be provided so that, when a sentence is specified, by applying an motion related to the meaning of the specified sentence to a three-dimensional model, a three-dimensional object performing an motion corresponding to the sentence is generated.

In addition, another technical object to be solved through embodiments of the present invention is directed to providing a method and system for generating a three-dimensional object that performs an entire motion corresponding to meaning of the sentence by sequentially combining a plurality of three-dimensional objects performing partial motions corresponding to meanings of words in the sentence.

Further, the present invention relates to a method and system for generating a connection motion between different motions to apply the connection motion to a three-dimensional model so that the three-dimensional model may naturally perform a plurality of motions in relation to meaning of the sentence.

### [Technical Solution]

To achieve the aforementioned objects, there is provided a method of generating a three-dimensional object, according to the present invention. The method may comprise: specifying a sentence based on a user input; analyzing the specified sentence and defining a plurality of motions corresponding to the sentence based on a result of the analysis; defining a connection motion connecting the plurality of motions corresponding to the sentence; and generating a moving three-dimensional object performing the plurality of motions and the connection motion by using a trained artificial neural network.

In an example, the connection motion may be a connection motion connecting at least two motions adjacent to each other according to a time series flow among the plurality of motions.

In an example, movement of the three-dimensional object may be formed by: a plurality of frames corresponding to a first motion among the plurality of motions, the plurality of frames including key point information of a three-dimensional model according to the first motion; a plurality of frames corresponding to a second motion among the plurality of motions, the plurality of frames including key point information of the three-dimensional model according to the second motion; and a plurality of frames corresponding to the connection motion connecting the first motion and the second motion, the plurality of frames including key point information of the three-dimensional model according to the connection motion.

In an example, each of the plurality of frames corresponding to the first motion, each of the plurality of frames corresponding to the second motion, and each of the plurality of frames corresponding to the connection motion may include position information for key points of the three-dimensional model.

In an example, when the first motion and the second motion are motions adjacent to each other according to a time series flow, key points of the three-dimensional model of the plurality of frames corresponding to the connection motion may be determined or defined based on the key point information of the three-dimensional model of the plurality of frames corresponding to the first motion and the plurality of frames corresponding to the second motion.

In an example, based on the time series flow, when the first motion is a motion preceding the second motion, position information of key points of the three-dimensional model included in a first frame among the plurality of frames corresponding to the connection motion may be related to position information of key points of the three-dimensional model included in a last frame among the plurality of frames corresponding to the first motion, and position information of key points of the three-dimensional model included in a last frame among the plurality of frames corresponding to the connection motion may be related to position information of key points of the three-dimensional model included in a first frame among the plurality of frames corresponding to the second motion.

In an example, positions of key points of the three-dimensional model included in the first frame of the connection motion may be identical to or adjacent to positions of key points of the three-dimensional model of the last frame of the first motion, and positions of key points of the three-dimensional model included in the last frame of the connection motion may be identical to or adjacent to positions of key points of the three-dimensional model of the first frame of the second motion.

There is provided a three-dimensional object generation system, according to the present invention. The three-dimensional object generation system may comprise: a storage unit including a pre-provided database; and a control unit configured to: specify a sentence based on a user input, analyze the specified sentence; define a plurality of motions corresponding to the sentence based on a result of the analysis; define a connection motion connecting the plurality of motions corresponding to the sentence; and generate a moving three-dimensional object performing the plurality of motions and the connection motion by using a trained artificial neural network.

There is provided a program stored in a computer-readable recording medium, executed by one or more processes in an electronic device, according to the present invention. The program may comprise instructions to perform: specifying a sentence based on a user input; analyzing the specified sentence and defining a plurality of motions corresponding to the sentence based on a result of the analysis; defining a connection motion connecting the plurality of motions corresponding to the sentence; and generating a moving three-dimensional object performing the plurality of motions and the connection motion by using a trained artificial neural network.

There is provided a method of generating a three-dimensional object, according to the present invention. The method may comprise: specifying a sentence based on a user input; analyzing the specified sentence and defining a continuity corresponding to the sentence based on a result of the analysis; acquiring a three-dimensional model and motion information corresponding to the continuity by using a pre-provided database; and generating a three-dimensional object performing a motion corresponding to the sentence by applying the motion information to the three-dimensional model.

There is provided a three-dimensional object generation system, according to the present invention. The three-dimensional object generation system may comprise: a storage unit including a pre-provided database; and a control unit configured to: specify a sentence based on a user input; analyze the specified sentence; define a continuity corresponding to the sentence based on a result of the analysis; acquire a three-dimensional model and motion information corresponding to the continuity by using the pre-provided database; and generate a three-dimensional object performing a motion corresponding to the sentence by applying the motion information to the three-dimensional model.

In addition, there is provided a program stored in a computer-readable recording medium, executed by one or more processes in an electronic device, according to the present invention. The program may comprise instructions to perform: specifying a sentence based on a user input; analyzing the specified sentence and defining a continuity corresponding to the sentence based on a result of the analysis; acquiring a three-dimensional model and motion information corresponding to the continuity by using a pre-provided database; and generating a three-dimensional object performing a motion corresponding to the sentence by applying the motion information to the three-dimensional model.

### [Advantageous Effects]

The method and system for generating a three-dimensional object according to the present invention define motions corresponding to meaning of a sentence and generate a three-dimensional object performing the defined motions, thereby making it possible to generate a moving three-dimensional object only with an input of the sentence without a user having to individually define motions of the three-dimensional object.

Further, the method and system for generating a three-dimensional object according to the present invention may further acquire information provided to implement various elements such as motion, expression, external shape, age, costume, gender, physical condition, background, place, situation, and the like of a three-dimensional model corresponding to the three-dimensional object, based on keywords specified in correspondence to the sentence.

In addition, according to various embodiments of the present invention, the method and system for generating a three-dimensional object may generate connection motion information for a plurality of motion information in which motion orders are continued, so that different motions performed by the three-dimensional object may be naturally connected.

### [Description of Drawings]

FIG. 1 illustrates a three-dimensional object generation system according to the present invention.
FIG. 2 illustrates an embodiment of a database included in the three-dimensional object generation system according to the present invention.
FIGS. 3 and 4 are flowcharts illustrating a method of generating a three-dimensional object according to the present invention.
FIG. 5 illustrates an embodiment of specifying a sentence based on a user input.
FIGS. 6 to 9 illustrate an embodiment of defining a motion corresponding to a sentence.
FIGS. 10 to 14 illustrate an embodiment of applying motion information to a three-dimensional model.

### [Mode for Disclosure]

Hereinafter, exemplary embodiments disclosed in the present specification will be described in detail with reference to the accompanying drawings. The same or similar constituent elements are assigned with the same reference numerals regardless of reference numerals, and the repetitive description thereof will be omitted. The suffixes "module", "unit", "part", and "portion" used to describe constituent elements in the following description are used together or interchangeably in order to facilitate the description, but the suffixes themselves do not have distinguishable meanings or functions. In addition, in the description of the exemplary embodiment disclosed in the present specification, the specific descriptions of publicly known related technologies will be omitted when it is determined that the specific descriptions may obscure the subject matter of the exemplary embodiment disclosed in the present specification. In addition, it should be interpreted that the accompanying drawings are provided only to allow those skilled in the art to easily understand the embodiments disclosed in the present specification, and the technical teachings disclosed in the present specification are not limited by the accompanying drawings, and includes all alterations, equivalents, and alternatives that are included in the teachings and the technical scope of the present invention.

The terms including ordinal numbers such as "first," "second," and the like may be used to describe various constituent elements, but the constituent elements are not limited by the terms. These terms are used only to distinguish one constituent element from another constituent element.

When one constituent element is described as being "coupled" or "connected" to another constituent element, it should be understood that one constituent element can be coupled or connected directly to another constituent element, and an intervening constituent element can also be present between the constituent elements. When one constituent element is described as being "coupled directly to" or "connected directly to" another constituent element, it should be understood that no intervening constituent element exists between the constituent elements.

Singular expressions include plural expressions unless clearly described as different meanings in the context.

In the present application, it should be understood that terms "including", "having", and the like are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

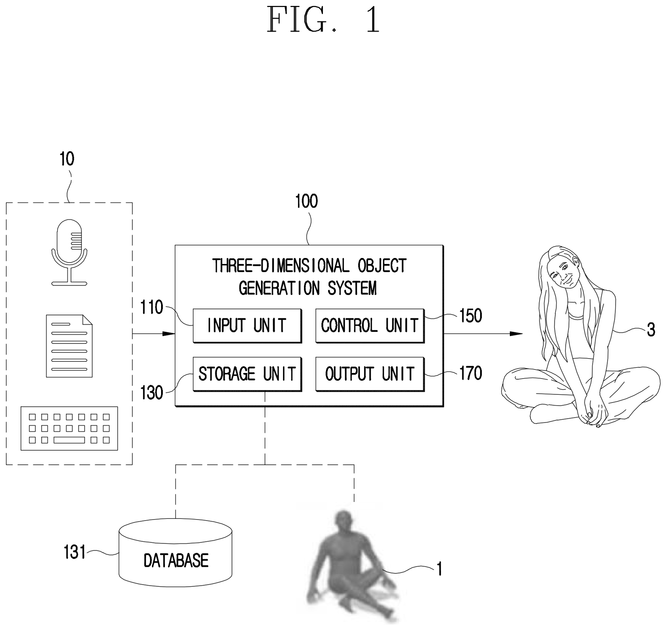

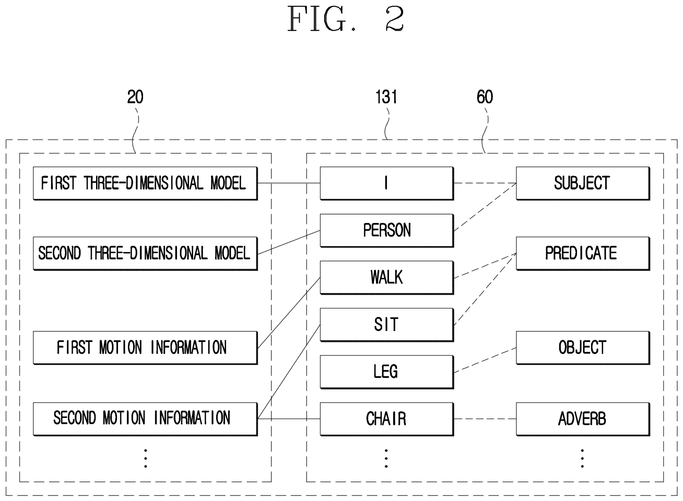

FIG. 1 illustrates a three-dimensional object generation system according to the present invention. FIG. 2 illustrates an embodiment of a database included in the three-dimensional object generation system according to the present invention.

With reference to FIG. 1, a three-dimensional object generation system 100 according to the present invention may specify a sentence based on a user input 10, and may analyze the specified sentence, and may define (or determine, generate, extract) a continuity corresponding to the sentence. The three-dimensional object generation system 100 may, based on training described in the later part, define the continuity corresponding to the sentence, or may define a motion, or may define a three-dimensional model. In the present invention, the continuity is information in which various matters such as a motion to be performed by a three-dimensional model in order to express a meaning or situation corresponding to the sentence, an external shape, a size, an expression, a gender, and the like of the three-dimensional model, are defined, and may also be understood as a "storyboard". In the present invention, the term "define (defining)" may be understood as determining, generating, or extracting information or data.

The three-dimensional object generation system 100 may, based on the defined continuity, acquire a three-dimensional model 1 corresponding to the sentence and motion information from a pre-provided database 131, and may generate a three-dimensional object 3 performing a motion according to the sentence by applying the motion information to the three-dimensional model 1. In the present invention, the three-dimensional model is a subject (for example, a person, an animal, an object, etc.) that performs the motion corresponding to the sentence, and the dynamic object in which the three-dimensional model moves and performs the motion is referred to as a three-dimensional object. In the present invention, the three-dimensional object described may be referred to, with variations, as a three-dimensional dynamic object, a three-dimensional graphic object, a three-dimensional graphic dynamic object, a three-dimensional modeling object, a three-dimensional animation object, or as an object, a dynamic object, a graphic object, a graphic dynamic object, a modeling object, an animation object, or the like. Meanwhile, in the following description, the subject performing the present invention is referred to as the three-dimensional object generation system 100, but this may also be described as being replaced with a control unit.

In the present invention, the continuity may include information defining at least one of a persona of a three-dimensional model or a motion of the three-dimensional model. That is, the three-dimensional object generation system according to the present invention may, based on a trained artificial intelligence model, define, generate, or extract information on at least one of the persona of a three-dimensional model or a motion of the three-dimensional model from a sentence.

In this case, the persona of the three-dimensional model may include information defining a visual external appearance, personality, and the like of the three-dimensional model.

The visual external appearance of a three-dimensional model may include at least some of various information capable of defining the visual external appearance of the three-dimensional model, such as an age, a gender, a height, a weight, a hairstyle, a facial type, a skin color, a clothing, and the like of the three-dimensional model. Further, a persona may include at least some of various information capable of influencing behavioral characteristics of the three-dimensional model, such as an occupation and a personality of the three-dimensional model. A three-dimensional model may be variously defined according to a specified sentence, such as a person, an animal, an object, or the like.

Meanwhile, a three-dimensional object generation system 100 may, based on the specified sentence input and another sentence (or other information, for example, information included in a paragraph including the specified sentence, or a sentence (or information) input before or after the specified sentence is input) related to the specified sentence, define the continuity.

Meanwhile, persona information for defining a three-dimensional model may be defined not by being extracted from a sentence, but based on a separate user input or a separate setting. In this case, a three-dimensional object generation system according to the present invention may be provided with a separate process for generating or defining a three-dimensional model that performs a motion according to a sentence. In this case, a three-dimensional object generation system 100 may specify at least one motion to be performed by a three-dimensional model from a sentence, and may generate a three-dimensional object in which the three-dimensional model performs the specified motion.

Meanwhile, in the present invention, it may also be understood that, from a sentence, instead of "defining a continuity", at least one "motion" to be performed by a three-dimensional model is defined from the sentence.

The three-dimensional object generation system 100 may receive user input 10 in various forms such as a voice signal, an image, a text, and the like, and may specify a sentence to be applied to a three-dimensional model 1 based on the received user input 10.

For example, when a three-dimensional object generation system 100 specifies a sentence such as "a person walks" based on the user input 10, the three-dimensional object generation system 100 may define a motion "walk" based on an analysis result of the sentence, and may acquire motion information related to "walk" from a database 131. Accordingly, the three-dimensional object generation system 100 may, by applying the acquired motion information to the three-dimensional model 1, generate and output a three-dimensional object 3 performing a walking motion. In this case, when the three-dimensional model 1 is defined as a person, the three-dimensional object generation system 100 may, by applying the acquired motion information to the three-dimensional model 1 provided in a person shape, generate and output a three-dimensional object 3 in a person form performing a walking motion. Hereinafter, for convenience of explanation, a three-dimensional model will be described by taking an example of a "person", but in the present invention, the three-dimensional model is not necessarily limited to a person.

Meanwhile, in the present specification, a sentence may be specified based on the user input 10, and the sentence may be specified in a form of text depicting at least one of a motion or an external shape of a three-dimensional object 3.

In addition, a three-dimensional object 3 may be something generated to be modeled on a three-dimensional space, and may be generated to have various shapes such as a person, an animal, an object, and the like.

For example, a three-dimensional object 3 may include at least one of a plurality of key points, a line connecting two different key points, a mesh representing a shape (or a volume) of the three-dimensional object 3, or a texture (or an image) representing a texture and an external shape of the three-dimensional object 3.

In this case, a three-dimensional model 1 may be provided to constitute a three-dimensional object 3, that is, the three-dimensional model 1 may form a framework (or a skeleton) of the three-dimensional object 3. To this end, the three-dimensional model 1 may be configured to correspond to at least one of a plurality of key points, a line connecting two different key points, or a mesh representing a shape (or a volume) of the three-dimensional object 3 of the three-dimensional object 3. According to an embodiment, the three-dimensional object 3 may be something generated by overlaying a texture on the three-dimensional model 1.

Meanwhile, the plurality of key points may be designated in position in correspondence to joint regions of the three-dimensional model 1 (or the three-dimensional object 3).

Further, the three-dimensional model 1 may further include, as label data for each key point, information for distinguishing each key point, an available movement range for a position of each key point, an available speed range, and the like for a change of each key point. Through this, the three-dimensional model 1 may be provided such that a natural movement is implemented.

Meanwhile, the continuity may include not only information for defining a motion of the three-dimensional model described above and information for defining a persona, but also various categories (or domains) of information for defining a situation in which the three-dimensional model performs a motion, information for defining a background in which the three-dimensional model performs a motion, and the like. For example, the continuity may include information (or definition) on various categories (or domains), such as a motion of a three-dimensional model, an external shape, an age, a costume, a gender, a physical condition of the three-dimensional model, a background, a place, and a situation, in which the three-dimensional model performs a motion, and the like. That is, the continuity may include (or define) information related to a shape of a three-dimensional model to be acquired in correspondence to the specified sentence, a motion to be applied to the three-dimensional model, and a place, a background, a situation, and the like in which the three-dimensional model is to be arranged.

For example, the three-dimensional object generation system 100 may, in correspondence to a sentence "a cat jumps over a wall", define a continuity such that a three-dimensional model having a shape corresponding to the cat performs a motion of jumping over the wall in a place where the wall is arranged. Specifically, "cat" is included in the continuity as a define for a category related to the external shape of the three-dimensional model, "wall" is included in the continuity as a define for a category related to a background in which the three-dimensional model is arranged, and "jump over" may be included in the continuity as a define for a category related to a motion to be applied to the three-dimensional model.

Meanwhile, motion information may include information generated such that the three-dimensional model 1 moves according to a motion based on a sentence. Specifically, the motion information may include information related to a movement for each of one or more key points included in the three-dimensional model 1. That is, the motion information may include a plurality of postures or a plurality of frames (or times), and each posture or each frame may include position information of each of the plurality of key points included in the three-dimensional model 1. In this case, the motion information may be designated such that a position of each of a plurality of key points is designated based on one point in a three-dimensional space.

For example, the motion information may include information related to a position change and a change speed for each of a plurality of key points included in a three-dimensional model 1.

As another example, the motion information may be generated so that position information for each of a plurality of key points included in the three-dimensional model 1 is designated at every preset time period (e.g., 1/60 second) for a series of time intervals corresponding to the motion information.

In addition, the motion information may include expression information corresponding to an expression category generated such that a face region of the three-dimensional model 1 moves according to an expression based on a sentence. In this case, the expression information may include information related to a movement for each of the key points belonging to the face region of the three-dimensional model 1, and thus may also be provided to be included in the motion information.

In addition, with reference to FIG. 2, a database 131 may store a plurality of different three-dimensional models 1 and a plurality of motion information 20. Here, the plurality of different three-dimensional models 1 may mean the plurality of three-dimensional models 1 provided to have different external shapes. For example, different plurality of three-dimensional models 1 may include objects having various external shapes such as a cat, a person, a boy, a girl, a dog, and the like. In this case, the plurality of different three-dimensional models 1 may have the number and positions of the plurality of key points, the shape of the mesh, the texture, and the like differently and respectively set according to the external shapes of the respective objects.

The database 131 may further store labeling information 60 (or, Tag, Keyword) matched with each of the plurality of three-dimensional models 1 and the plurality of motion information 20.

The labeling information 60 may be set to correspond to an analysis result of a sentence. That is, the labeling information 60 may be a keyword for the continuity defined according to a sentence, and may represent elements such as a motion according to the continuity, an external shape of a three-dimensional model, and the like. That is, the three-dimensional object generation system 100 may define a continuity corresponding to a sentence by acquiring a keyword from the sentence. In this case, the three-dimensional object generation system 100 may classify keywords by categories according to the continuity.

For example, the labeling information 60 may include words such as "person" and "walk" for a motion in which a person walks. As another example, the labeling information 60 may further include an object, a complement, an adverb, or the like in relation to the motion according to a subject and a predicate included in a sentence.

Through this, the three-dimensional object generation system 100 may acquire a three-dimensional model 1 and motion information corresponding to a sentence from the database 131 by using a continuity (e.g., keyword or word) defined based on an analysis result of the sentence. Specifically, the three-dimensional object generation system 100 may, through morphological analysis, in addition to a subject and a predicate included in a sentence, further consider various sentence components such as an object, a complement, an adverb, or the like, and may acquire a three-dimensional model 1 having more accurate and various external shapes and motion information 20 related to a motion.

In this regard, a database 131 may also store an artificial neural network model in which, when a continuity defined from a sentence is input, a three-dimensional model 1 and motion information corresponding to the sentence are output. In this case, the three-dimensional object generation system 100 according to the present invention may input a continuity defined based on an analysis result of a sentence into the artificial neural network model provided in the database 131, and may acquire a three-dimensional model 1 and motion information corresponding to the sentence from the artificial neural network model.

To this end, the artificial neural network model may be trained using a training continuity and correct three-dimensional model and correct motion information labeled as label data for the training continuity, and in this case, the three-dimensional model and motion information may include various information described above. Accordingly, the artificial neural network model may be trained such that, when a continuity is input, a three-dimensional model 1 and motion information corresponding to the input continuity are output by using the training continuity corresponding to the above various categories and the correct motion information.

In this regard, in the following, an overall motion of the three-dimensional object generation system 100 according to the present invention will be described through a method of retrieving a three-dimensional model and motion information corresponding to a continuity from the database 131, but it should be considered that, in the present invention, the three-dimensional model and motion information may also be generated through the artificial neural network model as described above.

In addition, the database 131 may store data classified by the above various categories. In this case, the three-dimensional object generation system 100 may match a continuity corresponding to a sentence by categories, and may acquire data corresponding to the matched categories from the database 131.

According to an embodiment, the database 131 may store a plurality of artificial neural network models classified by the above various categories, and may acquire data corresponding to each category.

To this end, the three-dimensional object generation system 100 according to the present invention may include an input unit 110, a storage unit 130, a control unit 150, and an output unit 170. Meanwhile, FIG. 1 illustrates only constituent elements related to an embodiment of the present invention. Accordingly, it can be understood by those skilled in the art to which the present invention pertains that, in addition to the constituent elements illustrated in FIG. 1, other general-purpose constituent elements may also be further included.

The input unit 110 may receive a user input 10 through a pre-provided input device. For example, the input device may refer to various devices such as a keyboard, a mouse, a touch pad, a microphone (MIC), a line input (Line-IN), and the like. Accordingly, the input unit 110 may receive a user input 10 corresponding to various types such as voice, text, and the like. Through this, the control unit 150 may acquire a sentence corresponding to a user input 10.

The storage unit 130 may store information and commands necessary for a motion of the three-dimensional object generation system 100 according to the present invention. Accordingly, the storage unit 130 may load one or more programs to execute methods/motions according to various embodiments of the present invention. An example of the storage unit 130 may be a RAM, but is not limited thereto.

Meanwhile, the storage unit 130 may store a database including a plurality of motion information. In addition, the storage unit 130 (or the database) may store a three-dimensional model 1 to which the motion information is to be applied.

The control unit 150 may control an overall motion of the three-dimensional object generation system 100 according to the present invention. To this end, the control unit 150 may include at least one of a CPU (Central Processing Unit), an MPU (Micro Processor Unit), an MCU (Micro Controller Unit), a GPU (Graphic Processing Unit), or any form of processor well known in the technical field of the present invention. In addition, the control unit 150 may perform an operation for at least one application or program to execute methods/motions according to various embodiments of the present invention. The three-dimensional object generation system 100 may include one or more control units 150.

Meanwhile, the control unit 150 may analyze a sentence corresponding to a user input 10, define a continuity corresponding to the sentence from the database 131, acquire a three-dimensional model and motion information based on the continuity, and generate a three-dimensional object 3 by applying the motion information to the three-dimensional model 1.

The output unit 170 may output a three-dimensional object 3 generated by the control unit 150. In this case, the output unit 170 may output the three-dimensional object 3 such that a user may visually identify it through a display device such as a monitor, a TV (Television), or the like.

Based on the configuration of the three-dimensional object generation system 100 described above, a method of generating a three-dimensional object will be described in more detail below.

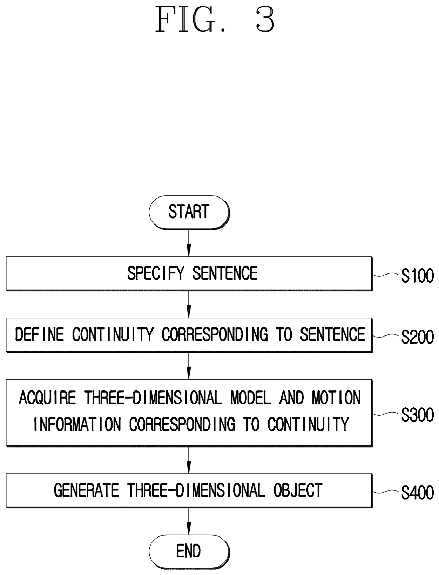

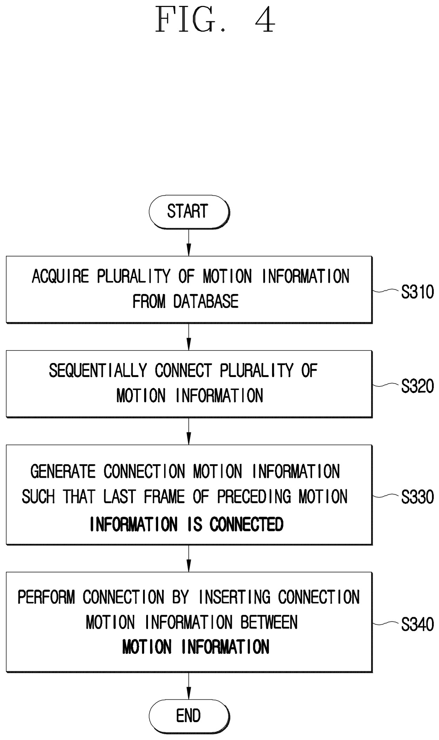

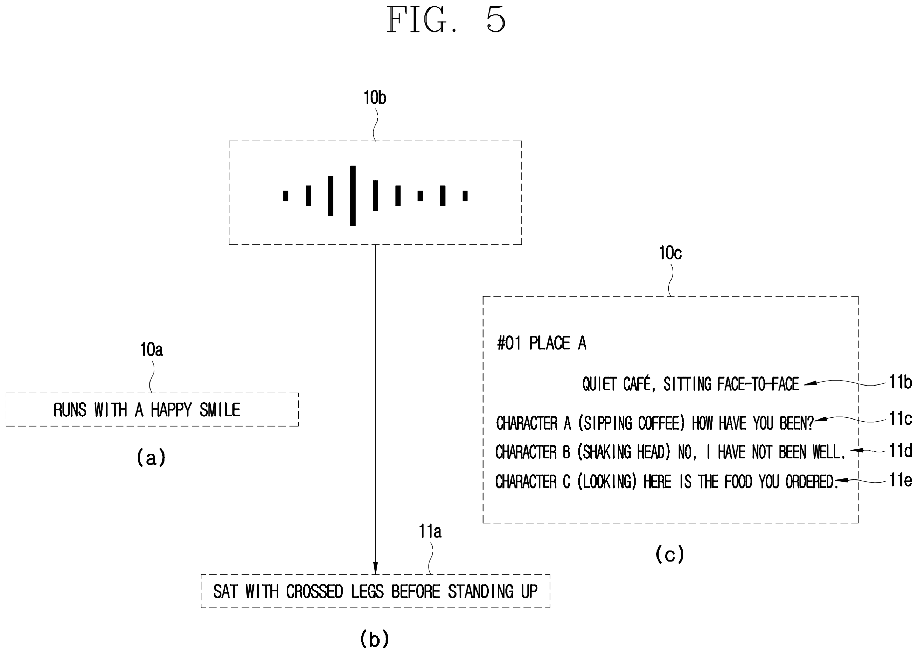

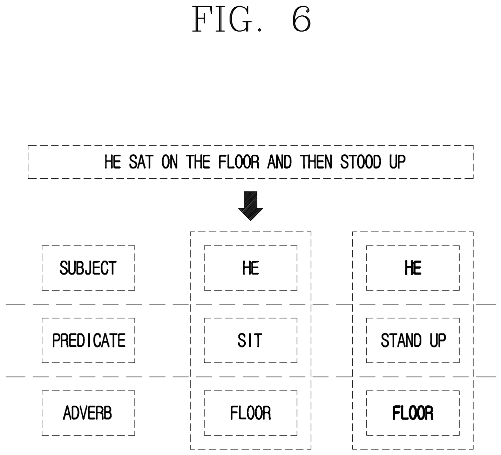

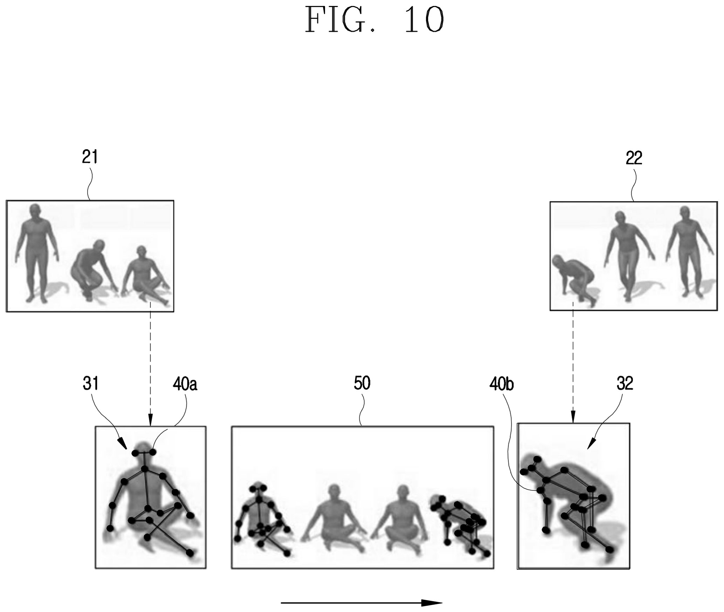

FIGS. 3 and 4 are flowcharts illustrating a method of generating a three-dimensional object according to the present invention. FIG. 5 illustrates an embodiment of specifying a sentence based on a user input. FIGS. 6 to 9 illustrate an embodiment of defining a motion corresponding to a sentence. FIGS. 10 to 14 illustrate an embodiment of applying motion information to a three-dimensional model.

With reference to FIG. 3, the three-dimensional object generation system 100 according to the present invention may specify a sentence based on a user input 10 (S100), analyze the specified sentence, and define a continuity corresponding to the sentence based on an analysis result (S200).

Specifically, when data input according to the user input 10 is text, the three-dimensional object generation system 100 may specify a sentence according to the input text. In addition, when data input according to the user input 10 is a form other than text, the three-dimensional object generation system 100 may analyze the input data to convert it into text, and may specify a sentence such that a motion to be applied to a three-dimensional model 1 is defined based on the converted text.

With reference to FIG. 5, for example, when a text 10a is input based on the user input 10, the three-dimensional object generation system 100 may specify the input text 10a as a sentence.

As another example, when data including a plurality of texts is input based on the user input 10, the three-dimensional object generation system 100 may perform an analysis on the input data to extract a plurality of texts, divide the extracted plurality of texts, and sequentially specify each of the divided texts, according to an order included in the data, as a sentence for generating a three-dimensional object 3.

To this end, the three-dimensional object generation system 100 may divide the plurality of texts included in the data based on a text corresponding to a preset sentence symbol (e.g., a period). Accordingly, the three-dimensional object generation system 100 may sequentially analyze the divided plurality of texts according to the order included in the data, and may define a continuity corresponding to each sentence.

As another example, when a voice signal 10b is input based on the user input 10, the three-dimensional object generation system 100 may generate a text (or a sentence) 11a corresponding to the user input 10 through an analysis of the voice signal 10b.

In this case, the three-dimensional object generation system 100 may use a technique (e.g., Speech-to-Text) to convert the voice signal 10b corresponding to the user input 10 into a text 11a, and may include a voice model, an artificial neural network, or the like for this purpose.

As another example, when an image is input based on the user input 10, the three-dimensional object generation system 100 may generate a text corresponding to the user input 10 through an analysis of the image.

In this case, the three-dimensional object generation system 100 may use a technique (e.g., Optical Character Recognition (OCR)) to convert an image corresponding to a user input 10 into text, and may include a character detection model, a character recognition model, an artificial neural network, and the like for this purpose.

As another example, when data generated according to a preset form (e.g., a script form) is input based on a user input 10, the three-dimensional object generation system 100 may extract one or more texts from preset areas representing an external shape of an object, a background, a motion of the object, and the like in correspondence to the form, and may sequentially specify the one or more extracted texts as a sentence for generating a three-dimensional object 3.

In this case, when the preset form is a script form, the three-dimensional object generation system 100 may extract one or more texts from areas corresponding to actions in the script (areas 11b, 11c parentheses, 11d parentheses, and 11e parentheses). Accordingly, the three-dimensional object generation system 100 may sequentially specify each text, according to an order included in the data, as a sentence for generating a three-dimensional object 3.

Further, the three-dimensional object generation system 100 may segment a sentence into a plurality of words in morpheme units, identify meanings corresponding to the segmented plurality of words, and generate (or extract) at least one keyword corresponding to a meaning of the specified sentence based on the identified meanings. In this case, generating at least one keyword corresponding to a meaning of a sentence by the three-dimensional object generation system 100 may be defining a continuity corresponding to the sentence.

For example, when a plurality of words included in a sentence are sequentially input, the three-dimensional object generation system 100 may use a trained artificial neural network (e.g., an RNN (Recurrent Neural Network) and an LSTM (Long Short Term Memory)) such that a keyword related to a continuity corresponding to the input plurality of words is output, and may define a continuity corresponding to the sentence.

In this case, the three-dimensional object generation system 100 may input the specified sentence into a pre-trained artificial neural network, acquire a keyword related to a continuity corresponding to the sentence, and generate a three-dimensional object performing a motion corresponding to the keyword.

As another example, the three-dimensional object generation system 100 may extract a word corresponding to a part of speech related to a motion of an object as a keyword by identifying a part of speech of each word included in a sentence.

In this case, the three-dimensional object generation system 100 may use a pre-trained artificial neural network to identify a part of speech of a word, or may identify a part of speech of a word through a pre-provided language model.

Through the above configurations, the three-dimensional object generation system 100 according to the present invention may generate a keyword related to a continuity from a specified sentence based on a user input 10.

With reference to FIG. 6, for example, when a sentence such as "He sat on the floor and then stood up" is specified, the three-dimensional object generation system 100 may acquire "he", "sit", "stand up", and "floor" as keywords related to a continuity through morphological analysis of the specified sentence. In this case, the three-dimensional object generation system 100, according to a sentence structure for the acquired keywords, may define an external shape of a three-dimensional model in correspondence to "he", may define a motion of sitting on a floor in correspondence to "sit" and "floor", and may define a motion of standing up from a floor in correspondence to "he", "stand up", and "floor".

As another example, when a sentence such as "Sit cross-legged and stand up" is specified, the three-dimensional object generation system 100 may define a sitting motion and a standing motion as a continuity corresponding to an analysis result of the specified sentence, and accordingly, may generate keywords related to "sit" and "stand up".

Further, the three-dimensional object generation system 100 may identify correlations among different plurality of words based on meaning of each of a plurality of words segmented from a sentence, and may determine at least one of a motion level or motion orders for at least one keyword related to the sentence based on the identified correlations.

Here, the motion level may represent a level for a region (e.g., an arm, a leg, a person) in which different plurality of motions are performed at the same point in time for one three-dimensional model 1.

In addition, the motion orders may represent an order of points in time at which different plurality of motions are performed for one three-dimensional model 1. That is, the motion orders may represent a temporal order in which one three-dimensional object performs motions.

For example, the three-dimensional object generation system 100 may, in correspondence to a sentence "sit with legs crossed", generate keywords such as "leg", "cross", and "sit". In this case, the three-dimensional object generation system 100 may identify, based on a preposition "-with" for "leg", that an object of "cross" is "leg". Accordingly, the three-dimensional object generation system 100 may determine "leg" and "cross" as the same motion level.

In addition, the three-dimensional object generation system 100 may identify, based on a preposition "-with" for "cross", that "sit" and "cross" are performed at the same point in time, and may determine, based on a motion "sit" being performed by an object, that a motion "cross" for "leg" has a lower motion level than "sit".

As another example, the three-dimensional object generation system 100, in correspondence to a sentence "sit and then stand up", may generate keywords such as "sit" and "stand up". In this case, the three-dimensional object generation system 100 may identify, based on an auxiliary adverb "-then" for "sit", that "stand up" is executed after "sit". Accordingly, the three-dimensional object generation system 100 may determine that "sit" has a preceding motion order compared to "stand up".

Further, when various elements related to a three-dimensional object are included in the continuity defined above, the three-dimensional object generation system 100 may match each of a plurality of keywords corresponding to the continuity with any one of preset plurality of categories (e.g., motion, expression, external shape, age, costume, gender, physical condition, background, place, situation, etc.) according to various elements, and may acquire information corresponding to each keyword from a database based on the matched categories.

For example, the three-dimensional object generation system 100 may match at least one of a plurality of keywords corresponding to the continuity with a category related to expression, so that an expression is applied to a face region of a three-dimensional model 1. In this case, the three-dimensional object generation system 100 may match a keyword related to a word corresponding to an emotion (or sentiment) among a plurality of words included in a sentence with a category related to an expression corresponding to the sentence.

In one embodiment, the three-dimensional object generation system 100 may, in correspondence to a sentence "run joyfully", generate keywords such as "joyful" and "run". In this case, the three-dimensional object generation system 100 may match "joyful", which is a keyword corresponding to an emotion, with a category related to an expression, and may match "run", which is a keyword corresponding to a motion, with a category related to a motion.

Further, when a keyword related to an external shape of a three-dimensional object 3 (or a three-dimensional model 1) is included among a plurality of words included in a sentence, the three-dimensional object generation system 100 may match the corresponding keyword with a category related to an external shape. In this case, the three-dimensional object generation system 100 may match a keyword related to an external shape of a three-dimensional object 3 with a keyword related to a motion. Through this, the three-dimensional object generation system 100 may acquire, from a database, information (e.g., a three-dimensional model and motion information) corresponding to each category, such that a three-dimensional object 3 having an external shape corresponding to a sentence performs a motion corresponding to the sentence.

For example, the three-dimensional object generation system 100, in correspondence to a sentence "a person runs", may generate a keyword "person" as a keyword related to an external shape of a three-dimensional model 1. In this case, the three-dimensional object generation system 100 may match a keyword "run", which is a keyword related to a motion, with the keyword "person", which is a keyword related to an external shape of a three-dimensional model 1.

As another example, the three-dimensional object generation system 100, in correspondence to a sentence "a cat jumps over a wall", may generate a keyword "cat" as a keyword related to an external shape of a three-dimensional model 1. In this case, the three-dimensional object generation system 100 may match keywords "wall" and "jump over" (or "jump" and "over"), which are keywords related to a motion, with the keyword "cat", which is a keyword related to an external shape of a three-dimensional model 1.

As another example, the three-dimensional object generation system 100, in correspondence to a sentence "a boy and a girl stand under one umbrella", may generate keywords "boy" and "girl" respectively as keywords related to an external shape of a three-dimensional model 1. In this case, the three-dimensional object generation system 100 may match keywords "umbrella", "under", and "stand", which are keywords related to a motion, with the keywords "boy" and "girl", which are keywords related to an external shape of a three-dimensional model 1.

As such, the three-dimensional object generation system 100 may determine a motion, an external shape, and the like of a three-dimensional object in correspondence to a keyword generated through a semantic analysis of a sentence, and further, may generate a three-dimensional object in correspondence to various keywords related to an age, a costume, a gender, a physical condition (e.g., body weight, height, etc.), and the like of the three-dimensional object.

Further, when a keyword related to a space in which a three-dimensional object is to be generated (e.g., a place, a background, an external shape of an object arranged in a space, a situation, etc.) is generated through a semantic analysis of a sentence, the three-dimensional object generation system 100 may also generate another three-dimensional object adjacent to the three-dimensional object corresponding to the keyword.

To this end, a database included in the three-dimensional object generation system 100 may store data corresponding to various categories such as motion, external shape, expression, age, costume, gender, physical condition, and the like.

Through the above configurations, the three-dimensional object generation system 100 according to the present invention may define at least one motion most suitable for a sentence by analyzing a specified sentence based on a user input 10.

Meanwhile, the three-dimensional object generation system 100 may also define a plurality of situations (or a plurality of continuities or a plurality of motions) as an analysis result of the specified sentence. In this case, each of a plurality of situations may be implemented in different spaces at the same point in time, or may be implemented in the same space at different points in time.

Accordingly, the three-dimensional object generation system 100 may acquire a three-dimensional model and motion information corresponding to each situation by using a database, and may generate a three-dimensional object such that the three-dimensional model performs a motion corresponding to each situation by applying the motion information to the three-dimensional model.

According to an embodiment, when a plurality of different situations are applied to one three-dimensional model, the three-dimensional object generation system 100 may generate a three-dimensional object such that the three-dimensional object performs a motion corresponding to a preceding situation and, after a preset time interval, performs a motion corresponding to a next situation, according to an order of the plurality of situations in a sentence analysis result.

In addition, the three-dimensional object generation system 100 may define a conditional continuity for a specified situation as an analysis result of a specified sentence. The conditional continuity may be set such that a three-dimensional object performs a motion corresponding to the conditional continuity when a condition set based on a sentence analysis result (or a user input) is satisfied.

For example, the conditional continuity may be defined such that a specified motion (e.g., a stretching motion) is performed at a specified time (e.g., 6 a.m.). In this case, a three-dimensional object generated based on the conditional continuity may be implemented such that the specified motion is performed at the specified time according to the situation.

As another example, the conditional continuity may be defined such that a specified motion (e.g., a greeting motion) is performed in response to a preset user input (e.g., a click on a three-dimensional object). In this case, a three-dimensional object generated based on the conditional continuity may be implemented such that the specified motion is performed in response to the user input.

To this end, the three-dimensional object generation system 100 may acquire a three-dimensional model and motion information corresponding to a conditional continuity from a database, generate a three-dimensional object by applying the motion information to the three-dimensional model, and set an event flag for a condition corresponding to the conditional continuity on the motion information applied to the three-dimensional model.

Through this, the three-dimensional object generation system 100 may generate a three-dimensional object performing a motion in correspondence to a specific condition, and may also generate one three-dimensional object to which a plurality of conditional continuities corresponding to different conditions are applied.

In addition, the three-dimensional object generation system 100 may directly define at least one motion as an analysis result of a specified sentence. In this case, the three-dimensional object generation system 100 may acquire motion information corresponding to the at least one defined motion from a database, and may generate a three-dimensional object performing a motion corresponding to a sentence by applying the motion information to a pre-provided three-dimensional model.

That is, the three-dimensional object generation system 100 may generate at least one keyword based on a sentence, may acquire at least one of a three-dimensional model or motion information corresponding to the at least one keyword from a database, and may generate a three-dimensional object through a process of applying the motion information to the three-dimensional model.

With reference back to FIG. 3, the three-dimensional object generation system 100 according to the present invention may acquire a three-dimensional model and motion information corresponding to a continuity by using a pre-provided database 131 (S300).

Specifically, the three-dimensional object generation system 100 may retrieve a three-dimensional model and motion information corresponding to at least one keyword generated above from the database 131. Accordingly, the three-dimensional object generation system 100 may acquire a searched three-dimensional model and motion information.

For example, when a keyword such as "run" is generated, the three-dimensional object generation system 100 may acquire motion information corresponding to a running motion by searching motion information corresponding to "run" in the database 131.

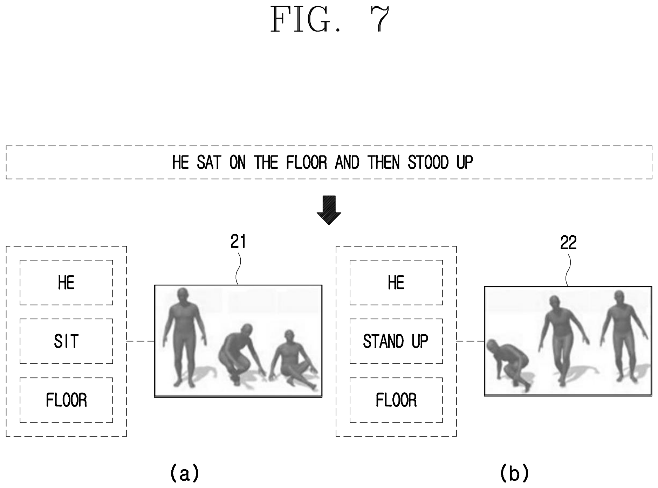

With reference to FIG. 7, as another example, for a sentence "He sat on the floor and then stood up", an external shape of a three-dimensional model related to "he" is defined as a continuity, and the three-dimensional object generation system 100 may search a three-dimensional model corresponding to "he" in the database 131. In addition, when a first motion related to "sit" and "floor" and a second motion related to "he", "stand up", and "floor" are defined, the three-dimensional object generation system 100 may search motion information corresponding to the first motion and the second motion in the database 131.

Accordingly, the three-dimensional object generation system 100 may respectively acquire, from the database 131, a three-dimensional model related to a person, motion information 21 related to a motion of sitting on a floor, and motion information 22 related to a motion of standing up from a floor.

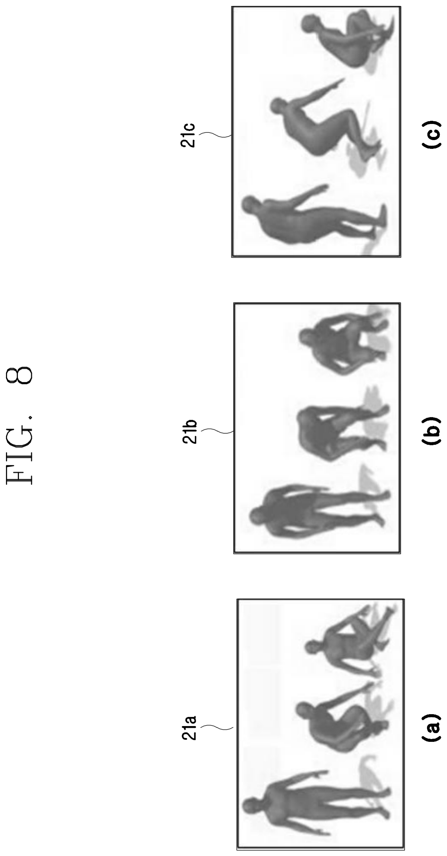

With reference to FIG. 8, as another example, when keywords such as "leg", "cross", and "sit" are generated, the three-dimensional object generation system 100 may search motion information corresponding to "sit" in the database 131 based on a set motion level for the keywords. In this case, the three-dimensional object generation system 100 may identify motion information on various ways of sitting motions, such as a sitting motion with crossed legs 21a, a squatting motion 21b, and a sitting motion with gathered legs 21c, and the like in correspondence to 'sit' from the database 131.

Accordingly, the three-dimensional object generation system 100 may identify and acquire motion information corresponding to "leg" and "cross" based on a motion level among a plurality of motion information searched in correspondence to "sit". As such, when keywords segmented into a plurality of motion levels are generated, the three-dimensional object generation system 100 may acquire the most suitable motion information for a plurality of keywords by performing a search of the database 131 in consideration of the motion levels.

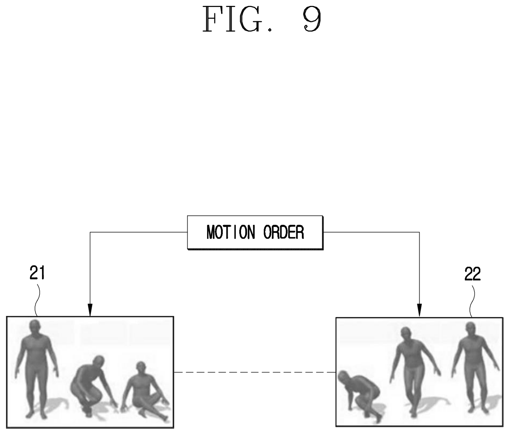

With reference to FIG. 9, as another example, when keywords such as "sit" and "stand up" are generated, the three-dimensional object generation system 100 may search and acquire motion information 21 corresponding to "sit" in the database 131 based on set motion orders for the keywords. Subsequently, the three-dimensional object generation system 100 may search and acquire motion information 22 corresponding to "stand up" in the database 131 based on the motion orders.

Accordingly, the three-dimensional object generation system 100 may acquire a plurality of motion information corresponding to a sentence by sequentially arranging motion information 21 related to "sit" and motion information 22 related to "stand up".

As another example, when keywords such as "joyful" and "run" are generated, the three-dimensional object generation system 100 may acquire expression information corresponding to "joyful" by searching in the database 131, and may acquire motion information corresponding to "run" by searching in the database 131.

Further, when a keyword related to an external shape of a three-dimensional model 1 is generated in correspondence to a sentence, the three-dimensional object generation system 100 may acquire the three-dimensional model 1 corresponding to the keyword related to the external shape from the database 131.

For example, when keywords "person" and "run" are generated, the three-dimensional object generation system 100 may acquire a three-dimensional model corresponding to a keyword related to "person" and motion information corresponding to a keyword "run" from the database 131.

As another example, when keywords "cat", "wall", and "jump over" (or "jump" and "over") are generated, the three-dimensional object generation system 100 may acquire a three-dimensional model corresponding to a keyword related to "cat" and motion information corresponding to keywords "wall" and "jump over" (or "jump" and "over") from the database 131.

As another example, when keywords "boy", "girl", "umbrella", "under", and "stand" are generated, the three-dimensional object generation system 100 may acquire three-dimensional models corresponding to keywords "boy" and "girl" and may acquire motion information corresponding to keywords "umbrella", "under", and "stand" from the database 131. In this case, the three-dimensional object generation system 100 may be implemented to acquire, from the database 131, motion information corresponding to keywords "umbrella", "under", and "stand" among motion information related to keywords "boy" and "girl".

Further, when a continuity related to a plurality of motions is defined in correspondence to a sentence, the three-dimensional object generation system 100 may acquire motion information corresponding to each of the plurality of motions from the database 131, and may sequentially connect the acquired motion information according to motion orders designated based on the continuity.

With reference to FIG. 4, when the three-dimensional object generation system 100 acquires a plurality of motion information from the database 131 (S310), it may sequentially connect the plurality of motion information acquired above according to motion orders designated based on an analysis result of a sentence (S320).

To this end, the three-dimensional object generation system 100 may sequentially connect different plurality of motion information by connecting a final frame of preceding motion information and an initial (first) frame of subsequent motion information, with respect to two motion information adjacent in motion order among the plurality of motion information acquired from the database 131.

In this case, the three-dimensional object generation system 100 may generate connection motion information for adjacent two motion information whose motion orders are adjacent such that motions according to the plurality of motion information acquired from the database 131 are naturally connected (S330).

The connection motion information is a type of motion information and may include information related to a motion performed between a preceding motion and a subsequent motion such that the two different motions are naturally connected.

To this end, the three-dimensional object generation system 100 may generate connection motion information so that a final posture of first motion information preceding in a motion order among two motion information acquired from the database 131 changes to an initial posture (or, first frame) of second motion information which is a next motion order.

Here, the final posture of the first motion information may be a posture in a last frame among a plurality of frames (or, time) included in the first motion information, and the initial posture of the second motion information may be a posture in a first frame among a plurality of frames (or, time) included in the second motion information.

With reference to FIG. 10, for example, the three-dimensional object generation system 100 may generate connection motion information 50 such that positions of a plurality of key points 40a in a final posture 31 of first motion information 21 are moved to positions of a plurality of key points 40b in an initial posture 32 of second motion information 22.

In this case, the three-dimensional object generation system 100 may generate connection motion information 50 such that each of a plurality of key points 40a corresponding to a final posture of the first motion information changes its position to a corresponding key point among a plurality of key points 40b corresponding to an initial posture of the second motion information.

As another example, the three-dimensional object generation system 100 may generate a plurality of first key points for a first posture to be included in connection motion information by using central points of positions of a plurality of key points corresponding to a final posture of first motion information and positions of a plurality of key points corresponding to an initial posture of second motion information, may generate a plurality of second key points for a second posture to be included in connection motion information by using central points of positions of a plurality of key points of the first motion information and positions of the plurality of first key points, and may generate a plurality of third key points for a third posture to be included in connection motion information by using central points of positions of the plurality of first key points and positions of a plurality of key points of the second motion information.

As described above, the three-dimensional object generation system 100 may repeat a process of generating a plurality of key points for a plurality of postures to be included in connection motion information by using central points among key points included in different motions.

Accordingly, when a plurality of postures to be included in connection motion information are generated, the three-dimensional object generation system 100 may determine an order of the plurality of postures to be included in connection motion information based on an order of being close between positions of a plurality of key points corresponding to a final posture of first motion information and positions of a plurality of key points corresponding to a plurality of postures to be included in connection motion information, and may generate connection motion information according to the determined order.

Alternatively, when a plurality of postures to be included in connection motion information are generated, the three-dimensional object generation system 100 may determine an order of the plurality of postures to be included in connection motion information based on an order of being far from positions of a plurality of key points corresponding to an initial posture of second motion information to positions of a plurality of key points corresponding to the plurality of postures to be included in the connection motion information, and may generate connection motion information according to the determined order.

As another example, the three-dimensional object generation system 100 may generate a connection motion line by connecting positions of a plurality of key points corresponding to a final posture of first motion information and positions of a plurality of key points corresponding to an initial posture of second motion information, and may generate a plurality of key points based on a preset interval (or preset number) from the plurality of key points of first motion information to the plurality of key points of second motion information on the generated connection motion line.

Accordingly, the three-dimensional object generation system 100 may determine an order of the plurality of postures to be included in connection motion information based on an order of being close to positions of the plurality of key points of first motion information, and may generate connection motion information according to the determined order.

Alternatively, the three-dimensional object generation system 100 may determine an order of the plurality of postures to be included in connection motion information based on an order of being far from positions of the plurality of key points of second motion information, and may generate connection motion information according to the determined order.

Further, in a process of generating connection motion information, the three-dimensional object generation system 100 may determine a motion speed of connection motion information by considering, with respect to the connection motion information, a first motion speed of first motion information which is a preceding motion and, with respect to the connection motion information, a second motion speed of second motion information which is a subsequent motion.

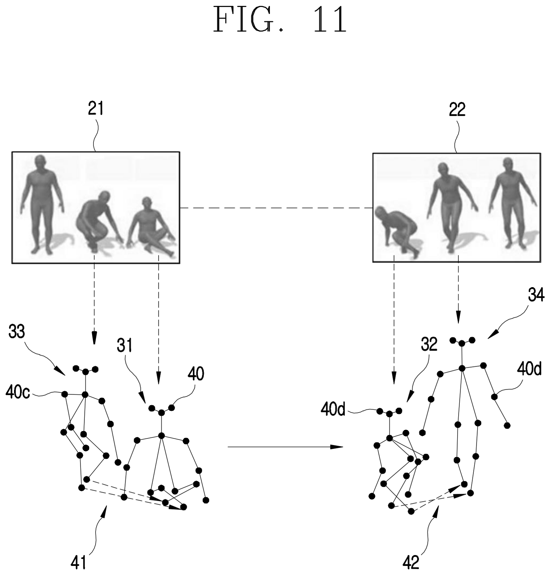

With reference to FIG. 11, for example, the three-dimensional object generation system 100 may determine a first motion speed based on a distance difference 41 between positions of a plurality of key points 40a at a final posture 31 of first motion information and positions of a plurality of key points 40c at a posture 33 immediately before the final posture 31, and may determine a second motion speed based on a distance difference 42 between positions of a plurality of key points 40b at an initial posture 32 of second motion information and positions of a plurality of key points 40d at a posture immediately after the initial posture 32.

Accordingly, the three-dimensional object generation system 100 may determine the motion speed of connection motion information such that the closer to the final posture 31 among a plurality of postures included in connection motion information, the closer to the first motion speed, and the closer to the initial posture 32, the closer to the second motion speed.

As another example, the three-dimensional object generation system 100 may calculate central points of positions of a plurality of key points corresponding to the final posture 31 and positions of a plurality of key points corresponding to the initial posture 32, and may calculate central points to which motion speeds are applied for key points at the final posture 31 and key points at the initial posture 32 by applying a ratio of the first motion speed and the second motion speed.

Accordingly, the three-dimensional object generation system 100 may generate a plurality of postures to be included in connection motion information by repeating a process of generating at least one posture close to the final posture 31 and at least one posture close to the initial posture 32 based on the central points to which motion speeds are applied. Through this, in the three-dimensional object generation system 100, one or more postures in which distances between key points are far may be generated as closer to a posture having a faster motion speed among the final posture 31 and the initial posture 32, and one or more postures in which distances between key points are close may be generated as closer to a posture having a slower motion speed. Accordingly, the three-dimensional object generation system 100 may sequentially arrange the plurality of postures generated through the process described above and may generate connection motion information.

As another example, the three-dimensional object generation system 100 may generate a first posture to be included in connection motion information by calculating central points of positions of a plurality of key points corresponding to the final posture 31 and positions of a plurality of key points corresponding to the initial posture 32, and may respectively determine a number of postures to be generated between the final posture 31 and the first posture and a number of postures to be generated between the initial posture 32 and a second posture based on a ratio of the first motion speed and the second motion speed.

As another example, the three-dimensional object generation system 100 may generate a connection motion line by connecting positions of a plurality of key points corresponding to the final posture 31 and positions of a plurality of key points corresponding to the initial posture 32, and on the generated connection motion line, may generate postures to be included in connection motion information at an interval with a smaller difference from a distance difference 41 corresponding to the first motion speed as closer to the final posture 31, and at an interval with a smaller difference from a distance difference 42 corresponding to the second motion speed as closer to the initial posture 32.

Further, with reference again to FIG. 4, the three-dimensional object generation system 100 may sequentially connect a plurality of motion information and may connect them by inserting connection motion information between each of the plurality of motion information (S340).

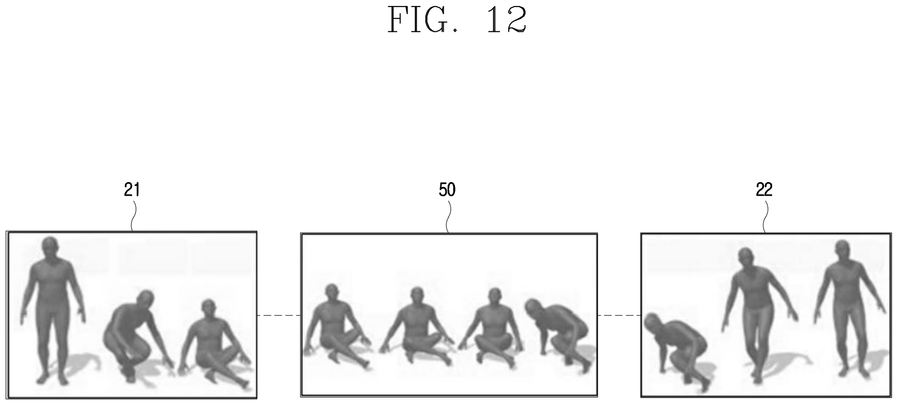

With reference to FIG. 12, for example, the three-dimensional object generation system 100 may acquire first motion information 21 related to a sitting motion and second motion information 22 related to a standing motion in correspondence to a sentence "sit down and then stand up", and may generate connection motion information 50 for the first motion information 21 and the second motion information 22. Accordingly, the three-dimensional object generation system 100 may connect a final posture of the first motion information 21 and an initial posture of the connection motion information 50, and may connect a final posture of the connection motion information 50 and an initial posture of the second motion information 22, thereby connecting the first motion information, the connection motion information, and the second motion information.

Through the above-described configurations, the three-dimensional object generation system 100 according to the present invention may acquire at least one motion information from the database 131 based on at least one keyword generated in correspondence to a sentence.

In addition, the three-dimensional object generation system 100 according to the present invention may further acquire information provided to configure an external shape of a three-dimensional object 3 and an expression of the three-dimensional object 3 based on at least one keyword generated in correspondence to a sentence.

Further, the three-dimensional object generation system 100 according to the present invention may naturally connect different motions by generating connection motion information for a plurality of motion information with successive motion orders.

With reference back to FIG. 3, the three-dimensional object generation system 100 according to the present invention may generate a three-dimensional object 3 performing a motion corresponding to a sentence by applying motion information to a three-dimensional model 1 (S400).

Specifically, the three-dimensional object generation system 100 may apply a position of at least one key point designated in a first frame, which is the earliest among a plurality of frames (or time), included in the motion information, to at least one key point corresponding to the at least one key point among a plurality of key points included in a pre-provided (or acquired from the database 131) three-dimensional model 1.

Subsequently, the three-dimensional object generation system 100 may apply a position of at least one key point designated in a second frame provided immediately after the first frame to at least one key point corresponding to the at least one key point among a plurality of key points included in the three-dimensional model 1, and may apply motion information to the three-dimensional model 1 by repeating the above process for all frames designated in the motion information.

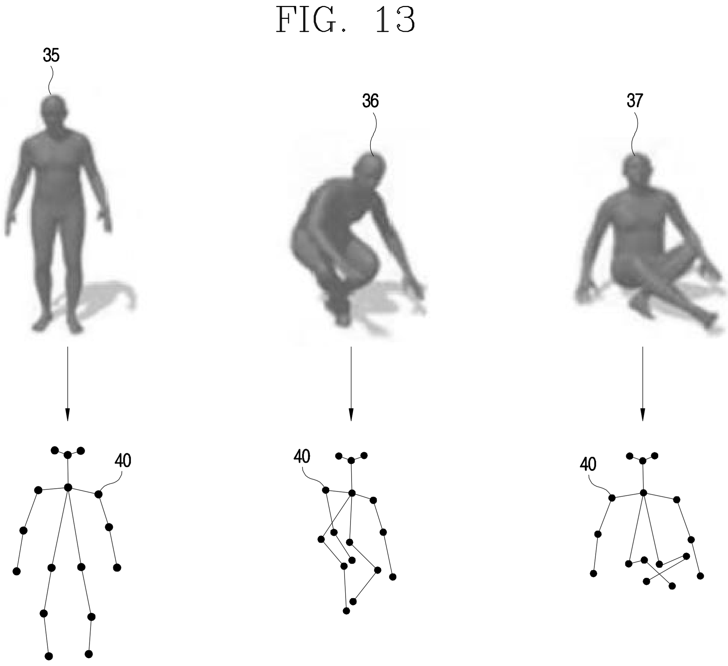

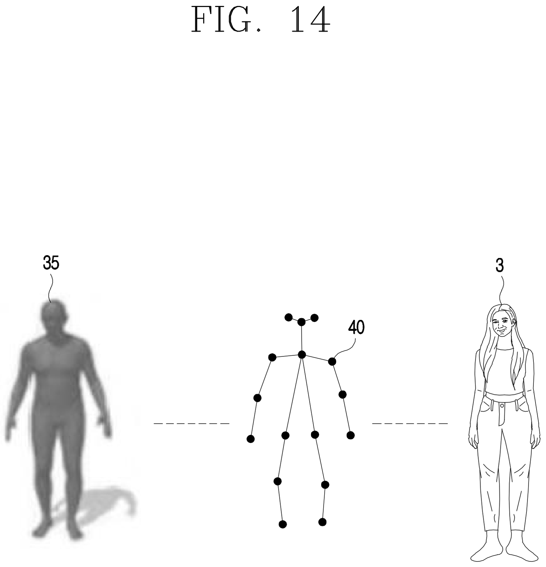

With reference to FIGS. 13 and 14, for example, the three-dimensional object generation system 100 may apply positions of a plurality of key points 40 corresponding to each posture 35 to a plurality of key points included in the three-dimensional model 1. In this case, the three-dimensional object generation system 100 may generate a three-dimensional object 3 performing a motion corresponding to a sentence by setting the plurality of key points included in the three-dimensional model 1 to sequentially move according to the posture of the connected motion information.

Through the above-described configurations, the three-dimensional object generation system 100 according to the present invention may generate a three-dimensional object 3 performing a motion corresponding to a sentence. In addition, the three-dimensional object generation system 100 may generate a more naturally moving three-dimensional object 3 by generating and applying a connection motion between different motions performed by the three-dimensional model 1.

Meanwhile, the three-dimensional object generation system 100 may also generate a three-dimensional object from a two-dimensional image (or video). For example, when a two-dimensional image is input, the three-dimensional object generation system 100 may detect an object from the two-dimensional image, identify a portion corresponding to the object through object segmentation, and extract data related to a posture of the object for each frame of the two-dimensional image. Accordingly, the three-dimensional object generation system 100 may collect and merge posture data extracted from each frame of the two-dimensional image according to different angles, and may generate a three-dimensional object with expressed volume and texture based on the merged result.

As one embodiment, the generation of the three-dimensional object may be performed based on a 3-dimensional volume metric. The three-dimensional volume metric may be implemented to generate a volume in a three-dimensional mesh form by setting an initial position where an object is positioned in a two-dimensional image as a reference point, identifying position information of the object when the object moves to another position in the two-dimensional image, and estimating a size of the object.

More specifically, the three-dimensional object generation system 100 may output a three-dimensional object in a mesh form based on volume and texture of an object in a two-dimensional image by receiving the two-dimensional image as an input. In this case, the input two-dimensional image may include a plurality of frames in which a shape of the object is expressed in various angles and/or positions.

The three-dimensional object generation system 100 may analyze key points and lines representing the object from the two-dimensional image, and may generate a three-dimensional point cloud as shape information of the object based on the analysis.

The three-dimensional object generation system 100 may generate a three-dimensional mesh object by performing three-dimensional mesh modeling and texture mapping based on the generated three-dimensional point cloud.

When a two-dimensional image is input, the three-dimensional object generation system 100 may reconstruct a three-dimensional model based on key points by tracking the key points of the object in the two-dimensional image 41. Along with this, the three-dimensional object generation system 100 may reconstruct a three-dimensional model based on lines by detecting and fitting lines of the object in the two-dimensional image. The three-dimensional object generation system 100 may use predetermined reconstruction parameters in a process of reconstructing the three-dimensional model.

Further, the three-dimensional object generation system 100 may generate a three-dimensional point cloud (PC) estimated as a three-dimensional shape of the object in the two-dimensional image by using the three-dimensional model reconstructed based on the key points and/or lines.

The three-dimensional object generation system 100 may perform 3D mesh modeling based on the three-dimensional point cloud (PC). A result of performing the 3D mesh modeling may be output as mesh information (MI) representing a volume of the three-dimensional object. The three-dimensional object generation system 100 may use predetermined modeling parameters for three-dimensional mesh modeling. Along with this, the three-dimensional object generation system 100 may perform texture mapping based on a color image of the two-dimensional image. A result of performing the texture mapping may be output as texture information (TI) representing texture of the three-dimensional object.

Further, the three-dimensional object generation system 100 may configure data related to a three-dimensional mesh by using the mesh information (MI) and the texture information (TI), and may generate a three-dimensional object based on the data.

Accordingly, the three-dimensional object generation system 100 may be implemented such that the three-dimensional object performs a three-dimensional motion based on motion information by merging previously generated motion information into the three-dimensional object.

In this case, the three-dimensional object may be a three-dimensional mesh object in a three-dimensional mesh form, or may be a pre-stored three-dimensional character object. Alternatively, in case where the three-dimensional object generation system 100 uses a three-dimensional character object imitating a celebrity or a virtual character instead of a three-dimensional mesh object, when motion information is merged into the three-dimensional character object, a three-dimensional object may be generated such that the three-dimensional character object reproduces movement of an object in a two-dimensional image.

In this regard, since the motion information is data created based on a sentence or a two-dimensional image, and the three-dimensional object is an object generated regardless of the sentence or the two-dimensional image, a disharmony may occur between the motion information and the three-dimensional object. Accordingly, in order to resolve such disharmony, the three-dimensional object generation system 100 may perform a re-targeting operation of adjusting the motion information to fit the three-dimensional object.

For example, the three-dimensional object generation system 100 may match joint positions of the motion information with joint positions of the three-dimensional object based on data related to key points of the motion information. Here, matching the joint positions of the motion information with the joint positions of the three-dimensional object may mean, for example, adjusting the joint positions of the motion information such that the joint positions of the motion information coincide with the joint positions of the three-dimensional object.

For instance, when the motion information is applied to the three-dimensional object, body characteristics of a model on which the motion information is based may be different from body characteristics of the three-dimensional object. Therefore, in order to remove disharmony caused by differences in body characteristics between objects, each joint position (that is, key point) of the motion information may be adjusted to coincide with the joint position (that is, key point) of the three-dimensional object.

In this case, a line of the motion information may also be adjusted together based on the adjusted key points of the motion information. For example, it is assumed that in motion information extracted from a database, there exist a key point K1 (1,1,1), a key point K2 (2,2,2), and a line L1 connecting the key point K1 and the key point K2. Through re-targeting, the key point K1 and K2 may be adjusted to K1 (1,2,2) and K2 (2,3,3), respectively, and accordingly, the line L1 may also be adjusted to a line connecting (1,2,2) and (2,3,3).

Further, the three-dimensional object generation system 100 may implement movement of the three-dimensional object to imitate movement of the motion information based on the matched joint positions of the motion information.

To this end, the three-dimensional object generation system 100 may adjust movement of the motion information based on the adjusted joint positions (that is, key points) and lines of the motion information. For example, positions of the key points and lines, movement distances (or displacement distances), motion ranges, and the like may be adjusted. Further, by merging movement of the adjusted motion information into a three-dimensional object, movement of the three-dimensional object may be implemented.

The three-dimensional object generation system 100 may output and store the implemented movement of the three-dimensional object.

Meanwhile, when the present invention is summarized and described from a motion perspective, the three-dimensional object generation system 100 according to the present invention may specify a sentence based on a user input and may analyze the specified sentence. Further, the three-dimensional object generation system 100 may define a plurality of motions corresponding to the sentence based on a result of the analysis, and may define a connection motion connecting the plurality of motions corresponding to the sentence. Further, the three-dimensional object generation system 100 may generate a moving three-dimensional object performing the plurality of motions and the connection motion by using a trained artificial neural network.

Here, the connection motion, as described above, may be a connection motion connecting at least two motions adjacent to each other according to a time series flow among the plurality of motions.

Further, movement of the three-dimensional object may be formed by a plurality of frames corresponding to a first motion including key point information of the three-dimensional model corresponding to the first motion among the plurality of motions, a plurality of frames corresponding to a second motion including key point information of the three-dimensional model corresponding to the second motion among the plurality of motions, and a plurality of frames corresponding to the connection motion including key point information of the three-dimensional model corresponding to the connection motion connecting the first motion and the second motion.

That is, the three-dimensional object may be understood as a moving shape of the three-dimensional model while a plurality of frames respectively corresponding to the first motion, the second motion, and the connection motion are played back.

As described above, a plurality of frames respectively corresponding to the plurality of motions and the connection motions, for example, each of a plurality of frames corresponding to the first motion, each of a plurality of frames corresponding to the second motion, and each of a plurality of frames corresponding to the connection motion, may include position information of key points of the three-dimensional model.

Further, among the plurality of frames, when motions adjacent to each other according to the time series flow, for example, the first motion and the second motion, are adjacent to each other according to the time series flow, the key points of the three-dimensional model of the plurality of frames corresponding to the connection motion may be defined based on key point information of the three-dimensional model of the plurality of frames corresponding to the first motion and the second motion.

In this case, based on the time series flow, when the first motion is a motion preceding the second motion, position information of key points of the three-dimensional model included in a first frame among the plurality of frames corresponding to the connection motion may be related to position information of key points of the three-dimensional model included in a last frame among the plurality of frames corresponding to the first motion, and position information of key points of the three-dimensional model included in a last frame among the plurality of frames corresponding to the connection motion may be related to position information of key points of the three-dimensional model included in a first frame among the plurality of frames corresponding to the second motion. Here, when it is stated that position information of the key points is related to each other, it may mean that the position information of the key points is identical to each other or is position information corresponding to adjacent positions.

For example, positions of key points of the three-dimensional model included in the first frame of the connection motion may be identical to or adjacent to positions of key points of the three-dimensional model of the last frame of the first motion, and positions of key points of the three-dimensional model included in the last frame of the connection motion may be identical to or adjacent to positions of key points of the three-dimensional model of the first frame of the second motion.

As described above, the method and system for generating a three-dimensional object according to the present invention define motions corresponding to meaning of a sentence and generate a three-dimensional object performing the defined motions, thereby making it possible to generate a moving three-dimensional object only with an input of the sentence without a user having to individually define motions of the three-dimensional object.

Further, the method and system for generating a three-dimensional object according to the present invention may further acquire information provided to implement various elements such as motion, expression, external shape, age, costume, gender, physical condition, background, place, situation, and the like of a three-dimensional model corresponding to the three-dimensional object, based on keywords specified in correspondence to the sentence.

In addition, according to various embodiments of the present invention, the method and system for generating a three-dimensional object may generate connection motion information for a plurality of motion information in which motion orders are continued, so that different motions performed by the three-dimensional object may be naturally connected.

Further, the present invention described above may be implemented as computer-readable code or instructions on a medium in which a program is recorded. That is, the various control methods according to the present invention may be provided in the form of a program, either in an integrated or individual manner.

Meanwhile, the computer-readable medium includes all kinds of recording devices for storing data readable by a computer system. Examples of computer-readable media include hard disk drives (HDDs), solid state disks (SSDs), silicon disk drives (SDDs), ROMs, RAMs, CD-ROMs, magnetic tapes, floppy discs, optical data storage devices, and the like.

Further, the computer-readable medium may be a server or cloud storage that includes storage and that the electronic device is accessible through communication. In this case, the computer may download the program according to the present invention from the server or cloud storage, through wired or wireless communication.

Further, in the present invention, the computer described above is an electronic device equipped with a processor, that is, a central processing unit (CPU), and is not particularly limited to any type.

Meanwhile, it should be appreciated that the detailed description is interpreted as being illustrative in every sense, not restrictive. The scope of the present invention should be determined on the basis of the reasonable interpretation of the appended claims, and all of the alternations within the equivalent scope of the present invention belong to the scope of the present invention.

## Claims

1. A method of generating a three-dimensional object, comprising:
specifying a sentence based on a user input;
analyzing the specified sentence and defining a plurality of motions corresponding to the sentence based on a result of the analysis;
defining a connection motion connecting the plurality of motions corresponding to the sentence; and
generating a moving three-dimensional object performing the plurality of motions and the connection motion by using a trained artificial neural network.

2. The method of claim 1, wherein the connection motion is a connection motion connecting at least two motions adjacent to each other according to a time series flow among the plurality of motions.

3. The method of claim 2, wherein movement of the three-dimensional object is formed by:
a plurality of frames corresponding to a first motion among the plurality of motions, the plurality of frames including key point information of a three-dimensional model according to the first motion;
a plurality of frames corresponding to a second motion among the plurality of motions, the plurality of frames including key point information of the three-dimensional model according to the second motion; and
a plurality of frames corresponding to the connection motion connecting the first motion and the second motion, the plurality of frames including key point information of the three-dimensional model according to the connection motion.

4. The method of claim 3, wherein each of the plurality of frames corresponding to the first motion, each of the plurality of frames corresponding to the second motion, and each of the plurality of frames corresponding to the connection motion include position information for key points of the three-dimensional model.

5. The method of claim 4, wherein when the first motion and the second motion are motions adjacent to each other according to a time series flow, key points of the three-dimensional model of the plurality of frames corresponding to the connection motion are defined based on the key point information of the three-dimensional model of the plurality of frames corresponding to the first motion and the plurality of frames corresponding to the second motion.

6. The method of claim 5, wherein, based on the time series flow, when the first motion is a motion preceding the second motion, position information of key points of the three-dimensional model included in a first frame among the plurality of frames corresponding to the connection motion is related to position information of key points of the three-dimensional model included in a last frame among the plurality of frames corresponding to the first motion, and position information of key points of the three-dimensional model included in a last frame among the plurality of frames corresponding to the connection motion is related to position information of key points of the three-dimensional model included in a first frame among the plurality of frames corresponding to the second motion.

7. The method of claim 6, wherein positions of key points of the three-dimensional model included in the first frame of the connection motion are identical to or adjacent to positions of key points of the three-dimensional model of the last frame of the first motion, and positions of key points of the three-dimensional model included in the last frame of the connection motion are identical to or adjacent to positions of key points of the three-dimensional model of the first frame of the second motion.

8. A three-dimensional object generation system, comprising:
a storage unit including a pre-provided database; and
a control unit configured to:
specify a sentence based on a user input;
analyze the specified sentence;
define a plurality of motions corresponding to the sentence based on a result of the analysis;
define a connection motion connecting the plurality of motions corresponding to the sentence; and
generate a moving three-dimensional object performing the plurality of motions and the connection motion by using a trained artificial neural network.

9. A program stored in a computer-readable recording medium, executed by one or more processes in an electronic device,
wherein the program comprises instructions to perform:
specifying a sentence based on a user input;
analyzing the specified sentence and defining a plurality of motions corresponding to the sentence based on a result of the analysis;
defining a connection motion connecting the plurality of motions corresponding to the sentence; and
generating a moving three-dimensional object performing the plurality of motions and the connection motion by using a trained artificial neural network.

10. A method of generating a three-dimensional object, comprising:
specifying a sentence based on a user input;
analyzing the specified sentence and defining a continuity corresponding to the sentence based on a result of the analysis;
acquiring a three-dimensional model and motion information corresponding to the continuity by using a pre-provided database; and
generating a three-dimensional object performing a motion corresponding to the sentence by applying the motion information to the three-dimensional model.

11. The method of claim 10, wherein the acquiring of the three-dimensional model and motion information comprises:
when a continuity related to a plurality of motions is defined in correspondence to the sentence, acquiring motion information corresponding to each of the plurality of motions from the database; and
sequentially connecting the acquired motion information according to motion orders designated based on the continuity.

12. The method of claim 11, wherein the sequentially connecting of the motion information comprises:
generating connection motion information so that a final posture of first motion information preceding in a motion order among the plurality of motions changes to an initial posture of second motion information which is a next motion order.

13. The method of claim 12, wherein the generating of the connection motion information comprises:
determining a motion speed of the connection motion information in consideration of a first motion speed of the first motion information and a second motion speed of the second motion information among the plurality of motions.

14. The method of claim 10, wherein the acquiring of the three-dimensional model and motion information comprises:
when the continuity includes a plurality of elements related to the three-dimensional object, matching each of a plurality of keywords corresponding to the continuity with any one of preset plurality of categories according to the plurality of elements; and
acquiring information corresponding to each keyword from the database based on the matched category.

15. The method of claim 10, wherein the specifying of the sentence comprises:
inputting data based on a user input;
analyzing the data and converting the data into text; and
specifying the sentence so that the continuity is defined based on the converted text.

16. The method of claim 10, wherein the defining of the continuity comprises:
segmenting the specified sentence into a plurality of words in morpheme units;
identifying meanings corresponding to the segmented plurality of words; and
generating at least one keyword corresponding to meaning of the specified sentence based on the identified meanings.

17. The method of claim 16, wherein the defining of the continuity comprises:
identifying a correlation among different plurality of words based on meaning of each of the plurality of words segmented from the sentence; and
determining at least one of a motion level or a motion order for the at least one keyword based on the identified correlation.

18. A three-dimensional object generation system, comprising:
a storage unit including a pre-provided database; and
a control unit configured to:
specify a sentence based on a user input;
analyze the specified sentence;
define a continuity corresponding to the sentence based on a result of the analysis;
acquire a three-dimensional model and motion information corresponding to the continuity by using the pre-provided database; and
generate a three-dimensional object performing a motion corresponding to the sentence by applying the motion information to the three-dimensional model.

19. A program stored in a computer-readable recording medium, executed by one or more processes in an electronic device,
wherein the program comprises instructions to perform:
specifying a sentence based on a user input;
analyzing the specified sentence and defining a continuity corresponding to the sentence based on a result of the analysis;
acquiring a three-dimensional model and motion information corresponding to the continuity by using a pre-provided database; and
generating a three-dimensional object performing a motion corresponding to the sentence by applying the motion information to the three-dimensional model.
